# EUROPÄISCHE PATENTANMELDUNG

(11) **EP 0 974 996 A2**
(43) Veröffentlichungstag der Anmeldung: **26.01.2000**
(21) Anmeldenummer: 99113244.0
(22) Anmeldetag: 06.07.1999
(51) Int. Cl.: H01H 71/56, H01H 73/04

(54) **Batterietrennschalter**

(30) Priorität: 20.07.1998 DE 19832573
(71) Anmelder: Siemens Electromechanical Components GmbH & Co. KG, 81739 München (DE)
(72) Erfinder: Hähnel, Thomas, 14199 Berlin (DE); Breitlow-Hertzfeld, Jürgen, 13055 Berlin (DE); Saffian, Bernd, 14170 Brandenburg (DE); Kern, Josef, 13629 Berlin (DE)
(74) Vertreter: Epping, Wilhelm, Dr.-Ing.

(57) **Zusammenfassung**

Der Batterietrennschalter wird mit einer Kontaktanordnung (81,64) zwischen eine Polklemme (21) und einen Hauptstromkreis geschaltet. Über ein Kniehebel-Spannwerk (32,33), das unmittelbar auf das freie Ende einer Kontaktfeder (8) wirkt, kann die Kontaktanordnung in ihrem Schließzustand verriegelt werden. Der Kniehebel ist außerdem mit dem Anker eines Elektromagnetsystems (4) gekoppelt, welches bei Erregung die Verriegelung löst und die Kontaktanordnung öffnet. Mit diesem Trennschalter kann das Bordnetz eines Fahrzeuges bei einem Aufprall oder einem Kurzschluß schnell stromlos geschaltet werden, um die Brandgefahr zu verringern oder bei einem sonstigen Störungszustand eine Entladung der Batterie zu verhindern.

## Beschreibung

Die Erfindung betrifft einen Trennschalter für den Laststromkreis einer Fahrzeugbatterie mit folgenden Merkmalen:
- einem Gehäuse,
- einem in dem Gehäuse angeordneten Elektro-Magnetsystem mit einem Anker,
- einem mit einer Polklemme verbindbaren Eingangsleiter,
- einem mit dem Laststromkreis verbindbaren Ausgangsleiter,
- einem feststehenden und einem beweglichen Kontakt zur Herstellung einer Schaltverbindung zwischen dem Eingangsleiter und dem Ausgangsleiter,
- einem den beweglichen Kontakt tragenden, zwischen einer Öffnungsposition und einer Schließposition umschaltbaren, durch Federkraft in die Öffnungsposition vorgespannten Kontaktträger,
- einem Kniehebel-Spannwerk mit einem an dem Kontaktträger angreifenden ersten Hebel und einem in dem Gehäuse gelagerten zweiten Hebel, die über ein mittleres Kniegelenk zu einem Kniehebel verbunden sind, welcher in annähernd gestrecktem Zustand den Kontaktträger in seiner Schließposition verriegelt,
- wobei der Anker derart mit dem Kniehebel gekoppelt ist, daß er bei Erregung des Magnetsystems die Verriegelung zwischen dem Kniehebel und dem Kontaktträger löst.

Ein derartiger Trennschalter ist bereits in der DE 197 01 933 C1 beschrieben. Dieser bekannte Trennschalter besitzt als Kontaktträger eine Kontaktwippe, die drehbar in dem Gehäuse gelagert ist und den beweglichen Kontakt mittelbar über eine als Hebelarm wirkende Kontaktfeder trägt. Zur Rückstellung der Kontaktwippe in die Öffnungsposition ist dort eine zusätzliche Aufreißfeder vorgesehen.

Ziel der vorliegenden Erfindung ist es, einen Lasttrennschalter mit dem eingangs genannten Aufbau zu schaffen, der mit besonders wenig Einzelteilen eine einfache und kompakte Konstruktion besitzt und dadurch noch wirtschaftlicher hergestellt werden kann. Er soll zumindest bei einer vorgegebenen Situation, beispielsweise beim Ansprechen eines Kurzschlußsensors oder eines Aufprallsensors, selbsttätig die Batterie vom Laststromkreis abtrennen, soll aber auch durch entsprechende Ausgestaltungen zusätzliche Funktionen übernehmen können, beispielsweise die Möglichkeit einer Abschaltung von Hand oder etwa eine Sperrung gegen Wiedereinschalten beim Andauern eines Kurzschlusses. Aufgrund seiner Konstruktion soll er unmittelbar an einem Batteriepol eines Fahrzeuges angebracht werden können.

Erfindungsgemäß wird das genannte Ziel dadurch erreicht, daß der Kontaktträger eine langgestreckte, einseitig im Gehäuse eingespannte Kontaktfeder ist, die im Mittelbereich ihrer Länge den beweglichen Kontakt trägt und an ihrem freien bzw. beweglichen Ende mit dem äußeren Ende des ersten Kniegelenkhebels unter Bildung eines ersten Drehgelenkes ineinandergreift.

Bei dem erfindungsgemäßen Trennschalter wird eine Kontaktfeder, also eine Flachformfeder, als Kontaktträger direkt am Gehäuse eingespannt, so daß zusätzliche Wippenelemente oder Lagerteile nicht erforderlich sind. Die Kontaktfeder erzeugt die Aufreißkraft selbst aufgrund ihrer Federvorspannung und ist an ihrem freien Ende unmittelbar mit dem Kniehebel gekoppelt, so daß eine einfache Ausführungsform mit wenigen Teilen möglich ist.

In einfachster Weise kann dabei vorgesehen werden, daß der Anker des Elektro-Magnetsystems über einen Betätigungsarm unmittelbar auf den Kniehebel, senkrecht zu dessen Streckachse, bzw. auf das mittlere Kniegelenk einwirkt und dieses bei Erregung des Magnetsystems über den Totpunkt zieht, wonach die derart freigegebene Kontaktfeder den Kontakt öffnet.

Um auch beim Schließen des Kontaktes, das in der Regel von Hand erfolgt, ein sprungartiges Schaltverhalten zu erreichen, kann die Kontaktfeder in ihrer Öffnungsposition durch eine Stützfeder oder einen Stützhebel kraftschlüssig bzw. formschlüssig festgehalten werden, so daß erst nach Überwindung einer vorgegebenen Reibung oder einer vorgegebenen Durchbiegung des freien Federendes der kontakttragende Mittelteil der Kontaktfeder freigegeben wird und sprungartig den Kontakt schließt.

Um ein Öffnen des Trennschalters von Hand zu ermöglichen, kann beispielsweise über eine im Gehäuse gelagerte Taste unmittelbar auf das mittlere Kniegelenk gedrückt werden, um dieses über den Totpunkt zu bewegen und den Kontakt zu öffnen. Vorzugsweise wird jedoch am zweiten Kniegelenk-Hebel eine Schaltfahne in Form einer Verlängerung angeformt, oder es wird ein mit dem zweiten Hebelarm starr oder beweglich gekoppeltes Drehorgan vorgesehen, das ein Aus- und/oder Einschalten von Hand ermöglicht.

Weitere Einzelheiten, Ausgestaltungen und Weiterbildungen der Erfindung werden nachfolgend an Ausführungsbeispielen anhand der Zeichnung näher erläutert. Es zeigt
Figur 1 die einzelnen Baugruppen eines erfindungsgemäß gestalteten Trennschalters in perspektivischer Darstellung,
Figur 2 die Spannwerk-Baugruppe mit Magnetsystem des Trennschalters von Figur 1 in teilweise montiertem Zustand,
Figur 3 die Polklemmen-Baugruppe von Figur 1 in halbmontiertem Zustand,
Figur 4 eine Draufsicht auf den Trennschalter von Figur 1,
Figur 5 den Trennschalter von Figur 1 in montiertem Zustand, jedoch mit offenem Deckel,
Figur 6 eine zweite Ausführungsform eines Trennschalters in Draufsicht,
Figur 7 einen Ausschnitt aus Figur 6 mit einer modifizierten Gestaltung des Kontaktbereiches,
Figur 8 und 9 eine dritte Ausführungsform des Trennschalters in Ruhelage und in ausgelöstem Zustand,
Figur 10 und 11 eine vierte Ausführungsform des Trennschalters in Ruhelage und in ausgelöstem Zustand,
Figur 12 das Spannwerk des Trennschalters von Figur 10 in Explosionsdarstellung,
Figur 13 das Spannwerk von Figur 12 in zusammengebautem Zustand in perspektivischer Darstellung und
Figur 14 und 15 eine fünfte Ausführungsform des erfindungsgemäßen Trennschalters in Draufsicht, und zwar in Ruhelage und in ausgelöstem Zustand.

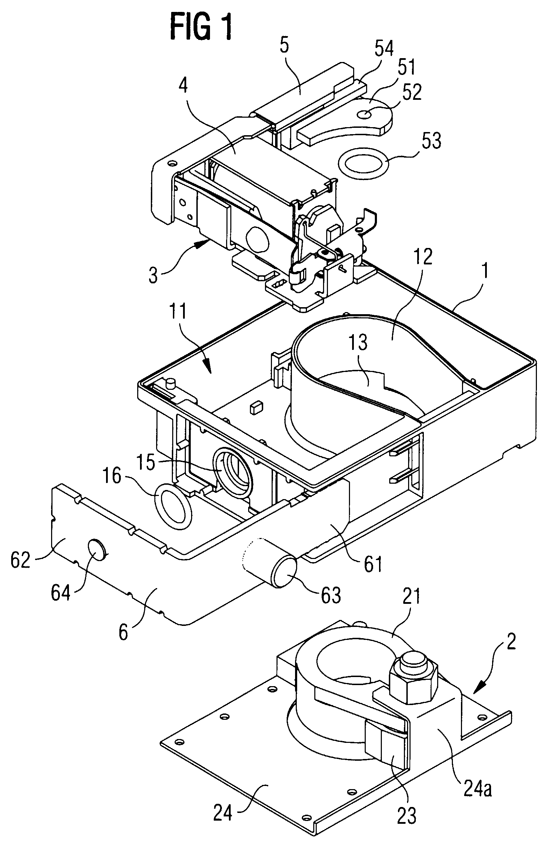

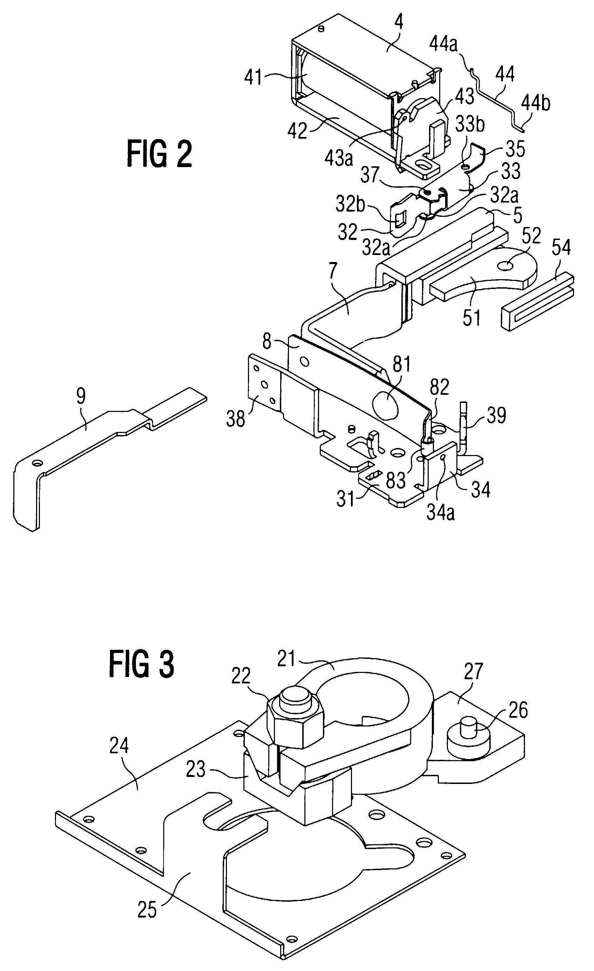

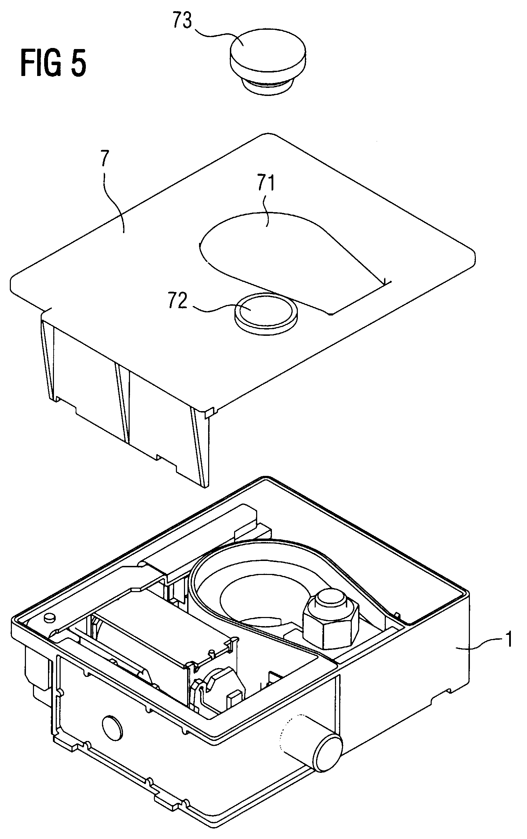

Der in den Figuren 1 bis 5 gezeigte Trennschalter hat einen besonders einfachen Aufbau. Er ist in einem Kunststoffgehäuse 1 untergebracht, welches mit einer Polklemmenbaugruppe 2 verbunden wird. Von oben wird in das Kunststoffgehäuse 1 eine Spannwerk-Baugruppe 3 eingesetzt, die mit einem Elektromagnetsystem 4 zusammenwirkt. Außerdem werden in das Gehäuse ein Eingangsleiter 5 und ein Ausgangsleiter 6 eingesteckt. Schließlich kann das Gehäuse 1 von der Oberseite her mit einem Deckel 7 dicht verschlossen werden (Figur 5).

Das Kunststoffgehäuse 1 besitzt einen von einer Bodenplatte und Seitenwänden begrenzten Schaltraum 11, der die Funktionsteile des Trennschalters aufnimmt. Innerhalb des Kunststoffgehäuses ist außerdem durch eine geschwungene Trennwand 12 ein Raum zur Aufnahme einer Polklemme 21 ausgespart. Da auch der Deckel 7 eine entsprechende Aussparung 71 aufweist, kann das verschlossene und abgedichtete Gehäuse mit dem Trennschalter auf den Batteriepol mit der Polklemme 21 derart aufgesetzt werden, daß die Polklemme bzw. eine entsprechende Klemmschraube 22 von außen zugänglich bleiben. Die Polklemme 21 wirkt mit einem Klemmenschuh 23 zusammen, der mit einer Grundplatte 24 aus Blech vernietet ist. Am vorderen Ende liegt diese mit einer U-Biegung 25 auf der Polklemme 21 auf, wo sie über die Klemmschraube 22 fixiert ist. Das Kunststoff-Gehäuse 1 wird auf die Grundplatte 24 gelegt und warmverprägt, wodurch sich der gesamte Batterietrennschalter beiderseits auf der Polklemme abstützt. Zur besseren Querversteifung besitzt die Grundplatte zusätzlich eine durchgehende, senkrechte Abbiegung an der Vorderseite.

An einer Verlängerung 27 des Polklemmenschuhs 23 ist ein runder Zapfen 26 angegossen, der nach oben durch das aus Kunststoff bestehende Gehäuse 1 in den Schaltraum 11 ragt. Über diesen Zapfen 26 wird der Batteriestrom auf den innen angenieteten Eingangsleiter 5 in das Innere des Trennschalters geführt. Dieser Eingangsleiter 5 besteht aus Kupferblech und ist U-förmig gebogen. Ein Schenkel 51 ist dabei mit einem runden Loch 52 auf den Zapfen 26 aufgesteckt und vernietet. Der runde Querschnitt des Zapfens 26 wird dabei gegenüber dem Boden des Gehäuses 1 durch einen O-Ring 53 waschdicht abgedichtet. An dem Schenkel 51 des Eingangsleiters 5 ist außerdem ein Ferritring 54 angeordnet, in dessen Schlitz ein Stromsensor, vorzugsweise ein Hall-Sensor, zur Überwachung des Batteriestromes eingelegt wird (nicht dargestellt). Hiermit kann zum Beispiel ein Kurzschluß detektiert werden, der als Impuls zur Abschaltung des Trennschalters verwendet wird. Der Stromsensor kann dabei direkt auf einer (nicht dargestellten) senkrecht eingebauten Leiterplatte aufgelötet sein. Die Elektronik einer solchen Leiterplatte dient zum Beispiel zur Auswertung des Kurzschlußsignals oder auch zur Anzeige des über den Stromsensor detektierten Batteriestromes für ein Batterie-Management.

Auf einem senkrecht abgebogenen Schenkel des Eingangsleiters 5 ist eine Litze 7 zur Weiterleitung des Stromes zu einem beweglichen Kontakt 81 angeschweißt. Dieser bewegliche Kontakt 81 ist in einer Kontaktfeder 8 befestigt, welche gehäusefest eingespannt ist. Bei der Litze 7 handelt es sich um zwei übereinandergelegte Flachlitzen, wodurch in Betätigungsrichtung des Kontaktes 81 eine gute Flexibilität bei großen Leiterquerschnitten gewährleistet ist. Die Kontaktfeder 8 ist als einseitig eingespannte Flachformfeder ausgeführt; die Kontakt-Aufreißkraft, der Kontakt-Weg sowie die Kontaktkraft und der Überhub werden über diese eine Feder aufgebracht; dieses eine Teil übernimmt dadurch die Funktionen einer Kontaktfeder, einer Rückstellfeder und einer Kontaktwippe. Der bewegliche Kontakt 81 ist etwa in der Mitte der freien Federlänge der Kontaktfeder 8 befestigt. Das freie Federende 82 ist abgebogen und zu einem Haken 83 geformt, mit dem die Kontaktfeder in Eingriff mit dem Spannwerk steht.

Die Spannwerkbaugruppe 3 besteht aus einem Kniehebelspannwerk, das auf einer Trägerplatte 31 angeordnet ist. Die Kontaktfeder 8 ist an einem senkrecht nach oben gebogenen Lappen 38 der Trägerplatte 31 befestigt. Weiterhin ist von der Trägerplatte 31 ein Vierkantzapfen 39 senkrecht nach oben gebogen, der als gestellfester Drehpunkt für das Spannwerk dient. Der Kniehebel des Spannwerks wird durch zwei entsprechend gebogene Blechteile, nämlich einen ersten Hebel 32 und einen zweiten Hebel 33 gebildet. An dem ersten Hebel 32 sind zwei Gelenkzapfen 32a freigeschnitten, die in Gelenklöchern 33a des U-förmig gebogenen zweiten Kniehebels 33 liegen und mit diesen ein mittleres Kniegelenk 37 bilden. Der zweite Kniehebel 33 besitzt weitere Gelenklöcher 33b, mit denen dieser zweite Hebel auf dem erwähnten Vierkantzapfen 39 gelagert ist. Der erste Hebel 32 besitzt an seinem äußeren, d.h. dem mittleren Kniegelenk abgewandten Ende eine ösenförmige Ausnehmung 32b, welche mit dem hakenförmigen Endabschnitt 83 der Kontaktfeder 8 ineinandergreift. In dem Gelenklöchern 33a und 33b des zweiten Hebels 33 sowie in dem hakenförmigen Endabschnitt 83 der Kontaktfeder liegen die jeweiligen Gelenkzapfen bzw. der Ösenrand des ersten Hebels bei gespanntem Zustand des Kniegelenks jeweils mit ihren Kanten an. Diese wirken im Moment der Auslösung, wenn das mittlere Kniegelenk über den Totpunkt gezogen wird, wie ein Schneidenlager, wodurch die Lagerreibung im Moment der Auslösung sehr gering ist und nur eine geringe Auslösekraft erfordert.

Das Elektromagnetsystem 4 besitzt eine Spule 41 mit einem Kern und einem Joch 42, an dessen freiem Ende ein Anker 43 in Form eines Klappankers gelagert ist. Zur Kopplung zwischen dem Anker 43 und dem Kniehebel 32, 33 ist ein gekröpfter Stelldraht 44 vorgesehen, der mit einem Ende 44a in eine Bohrung 43a des Ankers eingehängt ist und mit seinem anderen Ende 44b in einer Bohrung 34a eines nach oben gebogenen Lappens 34 der Trägerplatte geführt ist. Mit einer abgekröpften Schulter des Drahtendes 44b liegt der Stelldraht 44 in einer Kehle 33c des zweiten Hebelarms 33 in der Nähe des mittleren Kniegelenkes 37. Der Lappen 34 der Trägerplatte dient außerdem als Anlagekante des Kniehebelspannwerkes in gespanntem Zustand. Dabei drückt der erste Hebel 32 mit der Kehle 33c den Stelldraht gegen die Anlagekante des Lappens 34.

Zur Spannwerksauslösung zieht der Anker 43 bei Erregung des Magnetsystems über den Stelldraht 44 den zweiten Hebel 33 von dem Lappen 34 weg über den Totpunkt; danach wird der Kniehebel aufgrund der Rückstellkraft der Kontaktfeder 8 vollständig durchgedrückt. Durch Eigenfederung des Stelldrahtes liegt am Anfang des Ankerhubes nicht die volle Auslösekraft an dem Anker an, so daß dieser zu Beginn der Schaltbewegung nur die geringere Federkraft des Stelldrahtes überwinden muß, bis das Magnetsystem genug Kraft zum Auslösen des Spannwerkes aufgebaut hat.

Am zweiten Hebel 33 ist hinter dem gestellfesten Drehgelenk an dem Zapfen 39 eine Schaltfahne 35 nach oben gebogen, die durch ein Loch 72 im Deckel 7 nach oben ragt bzw. von außen zugänglich ist und so zum manuellen Ein- und Ausschalten dient. Mit Hilfe eines Schraubenziehers oder eines ähnlichen Werkzeuges kann die Schaltfahne 35 umgelegt werden, um den Kniehebel wieder zu spannen und die Kontaktfeder wieder zu schließen (manuelles Wiedereinschalten nach elektrischer Auslösung). Umgekehrt ist aber auch eine manuelle Abschaltung möglich. Die Schaltfahne 35 liegt in einem versenkten Bereich im Deckel, der mit einem Verschlußstopfen 73 nach außen abgedichtet werden kann. Dieser Verschlußstopfen 73 kann auch versiegelt werden, um ein Wiedereinschalten beim Andauern eines Kurzschlusses zu verhindern; in diesem Fall wird gewährleistet, daß nicht der Benutzer eines Fahrzeuges, sondern erst das Werkstattpersonal nach Beseitigung des Kurzschlusses bzw. einer Überprüfung des Stromkreises den Lastkreis wieder einschalten kann.

An der Außenseite des Gehäuses 1 ist der bereits erwähnte Ausgangsleiter 6 befestigt. Dieser ist L-förmig ausgeführt, wobei ein Schenkel 61 über eine Sägezahnkontur in einer entsprechenden Tasche an der Außenseite des Gehäuses 1 befestigt ist, während ein Schenkel 62 durch Warmverprägen an dem Gehäuse fixiert ist. Durch diese Fixierung werden die Kräfte eines an den Ausgangsleiter 6 über einen Bolzen 63 angeschraubten Batteriekabels aufgenommen; gleichzeitig wird durch die L-förmige Biegung des Ausgangsleiters das gesamte. Gehäuse versteift. An dem Schenkel 62 ist von der Innenseite ein Festkontakt 64 befestigt, der durch eine runde Öffnung 15 in das Gehäuseinnere ragt. Die Durchführung 15 für diesen feststehenden Kontakt 64 ist mit einem O-Ring 16 abgedichtet, so daß auch an dieser Stelle das Gehäuse waschdicht geschlossen ist. Der Festkontakt 64 besteht beispielsweise aus einem Kupfer-Rundteil mit aufplattiertem oder aufgeschweißtem Kontaktmaterial.

An dem Gehäuse 1 ist außerdem ein zusätzlicher Notstrom-Anschluß 9 angeordnet und mit dem Eingangsleiter 5 verbunden. Er dient zur Aufrechterhaltung von Notstromkreisen, beispielsweise für eine Warnblinkanlage, auch nach Auslösung des Trennschalters.

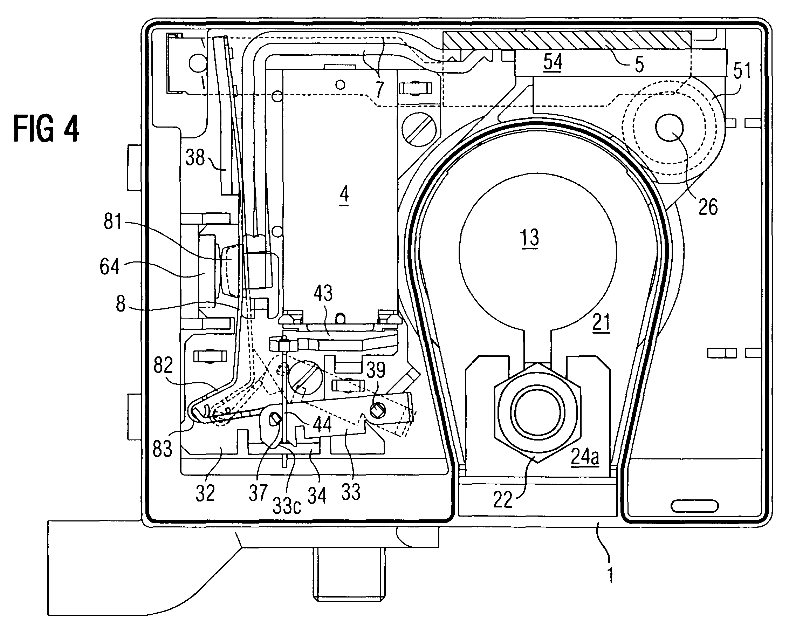

Die Funktion des Trennschalters soll nachfolgend noch einmal kurz geschildert werden. Im Ruhezustand ist der Kniehebel gespannt, wobei das mittlere Kniegelenk 37 leicht über den Totpunkt nach außen gedrückt ist und der zweite Hebel 33 an dem Lappen 34 anliegt. Dieser Zustand ist in Figur 4 gezeigt. Die Kontaktfeder 8 ist dabei entgegen ihrer Vorspannung in die Schließposition gedrückt, der bewegliche Kontakt 81 liegt auf dem Festkontakt 64. Bei Erregung des Elektromagnetsystems 4 zieht der Anker 43 an und verschiebt über den Stelldraht 44 das mittlere Kniegelenk 37 über den Totpunkt. Jenseits der Totpunktlage wird der Kniehebel mit der nun freiwerdenden Kontakt- und Aufreißkraft der Kontaktfeder 8 ausgelenkt, und der Federkontakt wird geöffnet. Die Kontaktfeder 8 und der Kniehebel 32,33 nehmen dann die in Figur 4 gezeigte gestrichelte Position ein.

Durch die Übersetzung über das Kniehebelspannwerk können die hohen Kontakt- und Aufreißkräfte der Kontaktfeder mit relativ kleinen Auslösekräften und damit kleinem Elektromagneten abgeschaltet werden; der Reibkraftanteil ist hierbei gering. Anstelle des Klappanker-Magnetsystems könnte natürlich auch ein Tauchankersystem verwendet werden, welches jedoch eine größere Ankermasse hätte und damit stoßanfälliger wäre. Zum manuellen Wiedereinschalten muß der Kniehebel wieder gespannt werden, wobei der Hebel 33 mittels der Schaltfahne 35, wie oben beschrieben, in die Ruhelage bewegt wird.

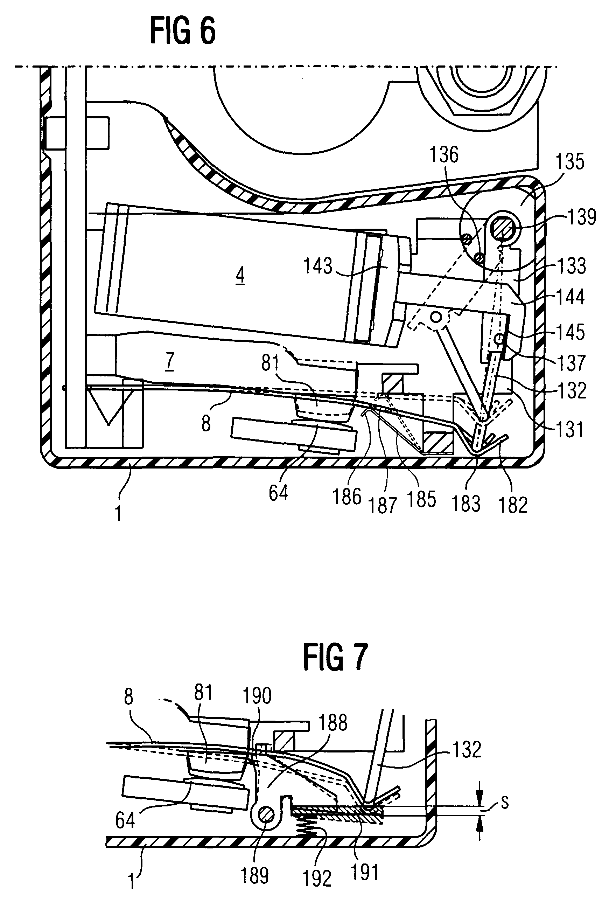

Der vorher beschriebene Grundaufbau eines Batterietrennschalters gilt auch für die nachfolgenden Varianten, die jeweils Abwandlungen in der Konstruktion des Kniehebel-Spannwerks und dessen Kopplung mit der Kontaktfeder sowie dem Magnetsystem enthalten. Die Figuren 6 bis 11 sowie 14 und 15 zeigen deshalb jeweils nur Teilansichten in Draufsicht und es werden auch nur diejenigen Teile beschrieben, die sich von dem ersten Ausführungsbeispiel unterscheiden; soweit andere Konstruktionsteile Abwandlungen zeigen, sind diese für die Erfindung nicht von Bedeutung.

In Figur 6 ist ein Ausführungsbeispiel beschrieben, bei dem ein abgewandelter Kniehebel aus einem ersten Hebel 132 und einem zweiten Hebel 133 gebildet wird, die ineinander zur Bildung eines mittleren Kniegelenkes 137 gelagert sind. Der zweite Kniehebel 133 ist an einem Vierkantzapfen 139, einer Trägerplatte 131 gestellfest gelagert. Auf dem gleichen Vierkantzapfen 139 ist auch ein Drehknopf 135 konzentrisch zum ersten Hebel 133 gelagert, welcher einen exzentrischen Mitnehmer 136 besitzt. Bei manueller Drehung entgegen dem Uhrzeigersinn wirkt dieser Mitnehmer 136 direkt auf den zweiten Hebel 133 und spannt damit den Kniehebel, der dabei leicht über den Totpunkt bewegt wird und dann an einer Anlagekante 145 eines Auslegers 144 des Ankers 143 anliegt. Dieser Ausleger 144 ist im vorliegenden Beispiel einstückig mit dem Anker 143 ausgeführt. Der erste Kniehebel 132 liegt mit seinem äußeren Ende in einer Einbuchtung 183 der Kontaktfeder 8 und bildet damit ein äußeres Kniegelenk. Durch eine Auffächerung des freien Federendes 182 , wobei ein mittlerer Federschenkel stärker eingebuchtet ist als die äußeren Federschenkel, wird der erste Hebel 132 auch seitlich in der Lagerung gesichert.

In Figur 6 ist zusätzlich eine Stützfeder 185 gezeigt, die an einem Lappen der Trägerplatte 131 befestigt ist und mit ihrem gebogenen freien Ende 186 in einer Ausnehmung 187 der Kontaktfeder 8 liegt, wenn diese sich im Öffnungszustand (gestrichelte Darstellung) befindet. Dies hat zur Folge, daß beim Spannen des Kniegelenkes die Stützfeder 185 die Kontaktfeder 8 so lange in ihrer Ruhelage hält, bis eine Grenzkraft überwunden ist, bei der das gebogene Ende 186 der Stützfeder nach Überwindung der Reibung aus der Ausnehmung 187 springt und die Kontaktfeder 8 freigibt. Mit dieser freigesetzten Kraft werden die Kontakte unabhängig von der Schalterstellung sprungartig geschlossen. Beim elektrischen Trennen der Kontakte wird dagegen mit der Stützfeder 185 die Kontakt-Aufreißkraft unterstützt.

Eine weitere Möglichkeit zur Erzeugung einer Sprungcharakteristik ist in Figur 7 in einem Ausschnitt gezeigt. In diesem Fall ist ein zusätzlicher Stützhebel 188 über ein Drehgelenk 189 auf der Trägerplatte 131 gelagert. Im Öffnungszustand der Kontaktfeder 8 greift eine an dem Stützhebel 188 angeformte Hebelklinke 190 an einer Lochkante der Kontaktfeder 8 an und hält diese in der Ruheposition fest, auch noch während des Spannens des Kniehebels. Erst wenn der Hebel 132 das Ende 182 der Kontaktfeder so weit durchgedrückt hat, daß diese auf das Ende 191 des Stützhebels 188 drückt, wird dieser Stützhebel mit dem restlichen Schalthub s im Uhrzeigersinn geschwenkt, so daß er die Kontaktfeder 8 freigibt und ein sprungartiges Schließen der Kontakte ermöglicht. Bei Rückkehr der Kontaktfeder 8 in ihre Ruheposition (Auslösung des Trennschalters) wird der Stützhebel durch eine Rückstellfeder 192 in seine Verriegelungsposition gebracht.

Um auch ein manuelles Abschalten mit Sprungverhalten zu erzeugen, gibt es verschiedene Möglichkeiten:
Es kann ein (nicht dargestellter) Drucktaster eingefügt werden, der wie der Ankerausleger 144 gegen das mittlere Kniegelenk 137 drückt und das Spannwerk auslöst.
Es kann aber auch der Drehknopf 135 so ausgeführt werden, daß er bei Rückwärtsdrehung (gegen den Uhrzeigersinn) über die Ruhestellung hinaus mit dem exzentrischen Mitnehmer 136 den zweiten Hebel 133 von der Gegenseite her erfaßt und damit das Spannwerk auslöst.

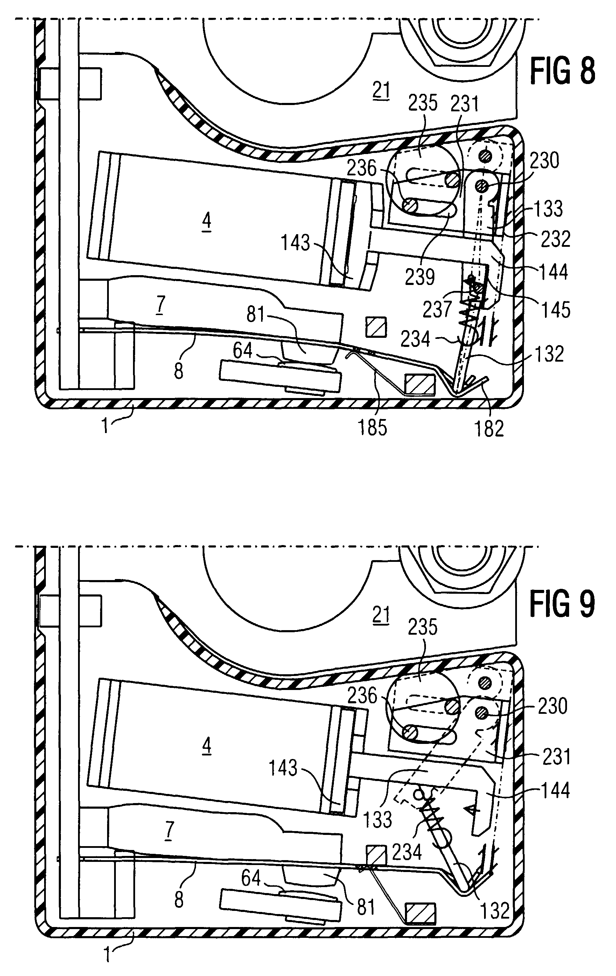

In den Figuren 8 und 9 ist eine weitere modifizierte Gestaltung des Kniehebel-Spannwerkes gezeigt. In diesem Fall sind die Kontaktfeder 8, der Anker 143 mit dem Ausleger 144 und die Hebel 132 und 133 so gestaltet wie im vorhergehenden Beispiel der Figur 6. Im Unterschied zu diesem vorherigen Beispiel ist allerdings der zweite Hebel 133 nicht gestellfest im Gehäuse gelagert, sondern über ein Drehgelenk 230 auf einem Schieber 231 gelagert, der seinerseits über eine Geradführung 232 im Gehäuse annähernd parallel zur Streckachse des Kniegelenkes verschiebbar geführt ist. Ein Drehknopf 235 ist getrennt von dem Schieber in dem Gehäuse gelagert und nach Art einer Kurbelschleife mit dem Schieber gekoppelt. Zu diesem Zweck besitzt der Drehknopf einen exzentrischen Mitnehmer 236, der in einem Langloch 239 des Schiebers in Eingriff ist.

Zum manuellen Wiedereinschalten nach einer elektrischen Auslösung muß in diesem Fall der Drehknopf 235 zum Spannen des Kniehebels entgegen dem Uhrzeigersinn zurückgedreht werden, wobei das mittlere Kniegelenk 237 über eine zusätzliche Kniehebel-Rückstellfeder 234 über den Totpunkt gezogen und an der Anlagekante 145 zum Anschlag gebracht wird., Erst dann wird durch Vorwärtsdrehung im Uhrzeigersinn des Drehknopfes 235 die Kontaktfeder 8 durch Längsverschiebung des Kniehebels in der Führung 232 gespannt. Die Fixierung des gespannten Zustandes (mit geschlossenen Kontakten) wird durch einen Anschlag des exzentrischen Mitnehmers 236 des Drehknopfes 235 in dem Langloch 239 jenseits des Totpunktes erreicht. Das manuelle Abschalten ist in diesem Fall durch die Kurbelschleifenanlenkung zwichen dem Drehknopf 235 und dem Schieber 231 ohne zusätzliche Maßnahmen möglich. Die elektrische Auslösung erfolgt auf die gleiche Weise wie bei der Ausführungsform gemäß Figur 6.

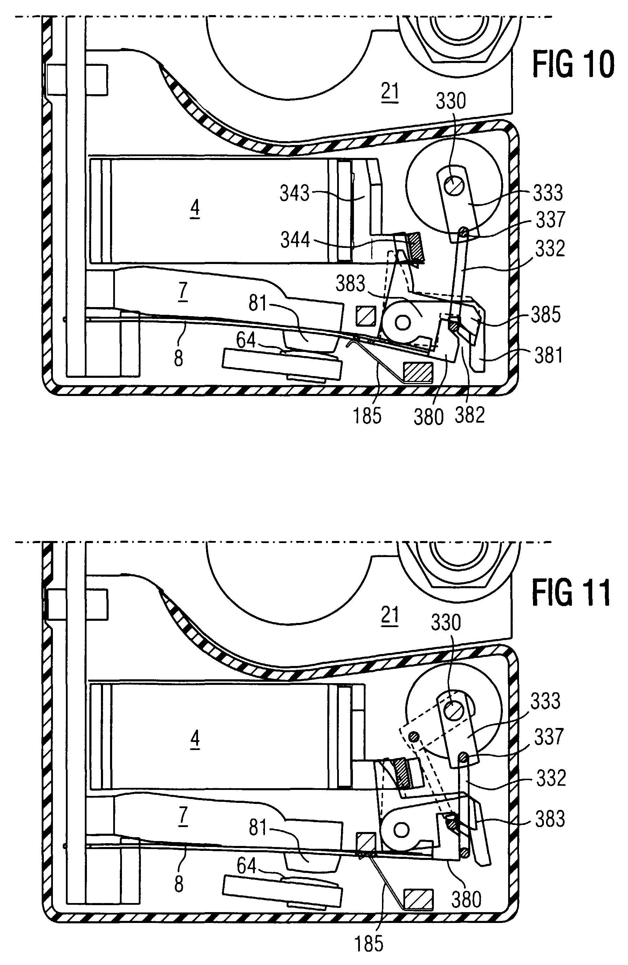

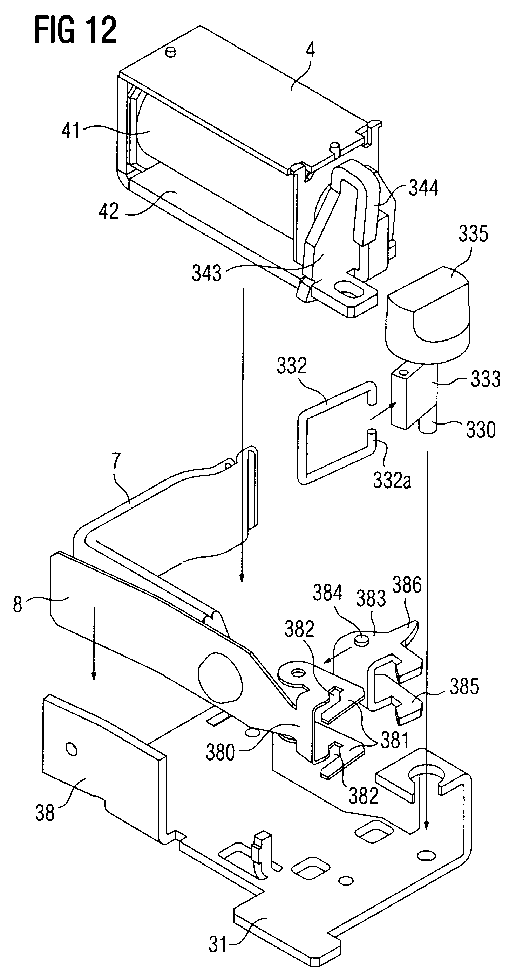

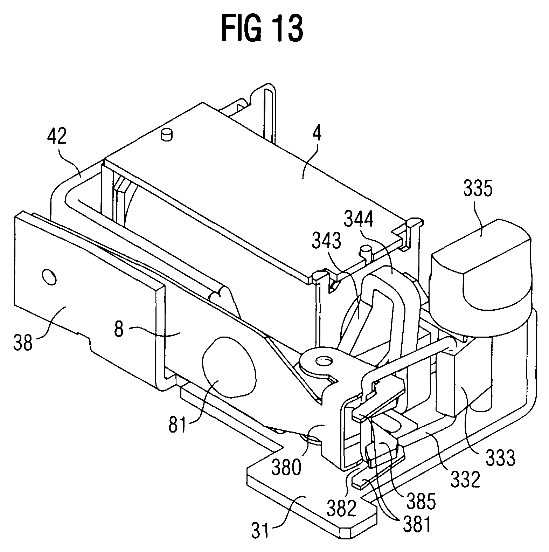

In den Figuren 10 bis 13 ist eine vierte Ausführungsform des erfindungsgemäßen Trennschalters gezeigt. Diese unterscheidet sich von den vorhergehenden Beispielen im wesentlichen dadurch, daß ein erster Kniehebel 332 mit seinem äußeren Ende kuppelbar mit der Kontaktfeder 8 in Eingriff ist. Die Kontaktfeder 8 ist an ihrem freien Ende 380 U-förmig gebogen, wobei in den Seitenschenkeln 381 jeweils Führungsschlitze 382 für den ersten Hebel 332 des Kniehebels vorgesehen sind. Dieser erste Hebel 332 ist als Drahtbügel geformt und mit seinen einwärts gebogenen Enden 332a in Bohrungen eines zweiten Hebels 333 eingehängt, um ein mittleres Kniegelenk 337 zu bilden. Der zweite Hebel 333 ist starr mit einem Drehknopf 335 verbunden, der gestellfest mit einer Achse 330 im Gehäuse gelagert ist.

In dem U-förmig gebogenen Ende 380 der Kontaktfeder 8 ist außerdem eine Schaltklinke 383 über Lagerzapfen 384 schwenkbar gelagert, welche mit Verriegelungshaken 385 den ersten Hebel 332 in den Führungsschlitzen 382 zu verriegeln vermag. Dieser Zustand ist in Figur 10 mit durchgezogenen Linien dargestellt. An einer Betätigungsnase 386 der Schaltklinke greift ein Ausleger 344 eines abgewandelten Ankers 343 des Magnetsystems an. Über diesen Ausleger 344 und die Betätigungsnase 386 wird bei Erregung des Magnetsystems 4 die Schaltklinke 383 geschwenkt, wodurch der Kniehebel entriegelt wird. Damit kommt das freie Ende 380 der Kontaktfeder von dem Kniehebel frei, so daß der Kontakt aufgrund der Rückstellkraft der Kontaktfeder 8 öffnet. Dieser Öffnungszustand ist in Figur 11 mit durchgezogenen Linien gezeigt.

Auch wenn in diesem Fall der Drehknopf 335 in der Einschaltposition verbleibt und damit der Kniehebel weiterhin gestreckt ist, wird der Kontakt durch das ansprechende Magnetsystem geöffnet, womit die Kurzschlußfreischaltung gesichert ist. So lange das Magnetsystem erregt ist, kann auch der Kniehebel nicht mit der Kontaktfeder verriegelt werden, und ein Schließen des Kontaktes ist somit nicht möglich. Erst wenn der Elektromagnet nicht mehr erregt ist, wird die Schaltklinke 383 durch eine nicht dargestellte Klinkenfeder in ihre Ausgangslage gebracht. Dann kann durch Drehen des Drehknopfes 335 der Kniehebel gebeugt werden, wodurch der erste Hebel 332 in die Führungsschlitze 382 eingekuppelt und dort verriegelt werden. Durch Zurückdrehen des Drehknopfes entgegen dem Uhrzeigersinn kann dann der Kontakt manuell wieder eingeschaltet werden.

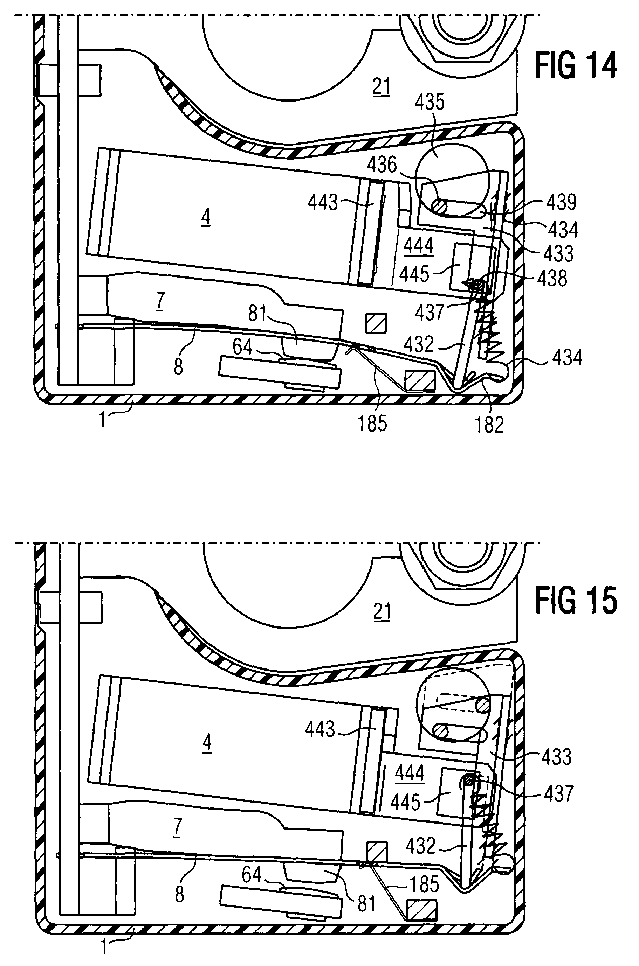

In den Figuren 14 und 15 ist eine fünfte Ausführungsform des erfindungsgemäßen Trennschalters gezeigt. Bei diesem Beispiel das Kniehebel-Spannwerk gegenüber Figur 6 in der Weise abgewandelt, daß der erste Kniehebel 432 ein mittleres Kniegelenk 437 bildet, das nur bei gestrecktem Zustand des Kniehebels mit dem zweiten Hebel verrastet ist, der seinerseits durch einen Schieber 433 gebildet wird. Dieser Schieber 433 ist im Gehäuse durch eine geradlinige Führung 431 annähernd parallel zur Streckachse des Kniegelenkes geführt und bildet eine Rast 438, in die das mittlere Kniegelenk 437 durch eine Rückstellfeder 434 gezogen wird. Der Schieber 433 ist über ein Langloch 439 mit einem exzentrischen Mitnehmer 436 eines gestellfest gelagerten Drehknopfes nach Art einer Kurbeischleife wie bei der Ausführungsform gemäß Figur 8 verbunden. Wird der Drehknopf 435 entgegen dem Uhrzeigersinn verdreht, nimmt der Schieber 433 die äußere Endposition (in Figur 15 gestrichelt gezeichnet) ein, so daß der erste Hebel 432 mit dem mittleren Kniegelenk 437 in die Rast 438 des Schiebers einrastet. Durch eine Schaltknopfdrehung im Uhrzeigersinn wird der Schieber 433 und mit ihm das gespannte Kniegelenk in Richtung zur Kontaktfeder 8 verschoben, so daß der Kontakt geschlossen wird (Position gemäß Figur 14). Ein Anker 443 des Elektromagnetsystems 4 ist in diesem Fall mit einem Ausleger 444 so gestaltet, daß das mittlere Kniegelenk 437 des ersten Hebels 432 in einem Fenster 445 des Auslegers liegt. Beim Ansprechen des Trennschalters, d.h. bei Erregung des Elektromagnetsystems, schiebt der Anker 443 über den Ausleger 444 das mittlere Kniegelenk 437 aus der Rast 438 über den Totpunkt, wodurch das Spannwerk ausgelöst wird und die Kontaktfeder öffnet, auch wenn der Drehknopf 435 in der Einschaltposition verbleibt (Figur 15). Wird der Schieber 433 durch eine Schaltknopfdrehung entgegen dem Uhrzeigersinn zurückgeschoben, kuppelt der erste Hebel 432 mit dem mittleren Kniegelenk 437 wieder in die Rast 438 ein. Bei Drehung des Drehknopfes 435 im Uhrzeigersinn werden dann der Schieber 433 und der erste Hebel 432 wieder in Richtung zur Kontaktfeder bewegt, wobei letztere gespannt und der Kontakt geschlossen wird.

Für den Fachmann ist klar, daß einzelne Konstruktionselemente der verschiedenen Ausführungsformen auch untereinander kombiniert werden können, um weitere modifizierte Trennschalter zu schaffen.

## Patentansprüche

1. Trennschalter für den Laststromkreis einer Fahrzeugbatterie mit folgenden Merkmalen:
- einem Gehäuse (1),
- einem in dem Gehäuse (1) angeordneten Elektromagnetsystem (4) mit einem Anker (43;143;343;443),
- einem mit einer Polklemme (21) verbindbaren Eingangsleiter (5),
- einem mit dem Laststromkreis verbindbaren Ausgangsleiter (6),
- einem feststehenden und einem beweglichen Kontakt (64,81) zur Herstellung einer Schaltverbindung zwischen dem Eingangsleiter (5) und dem Ausgangsleiter (6),
- einem den beweglichen Kontakt (81) tragenden, zwischen einer Öffnungsposition und einer Schließposition umschaltbaren, durch Federkraft in die Öffnungsposition vorgespannten Kontaktträger (8),
- einem Kniehebel-Spannwerk mit einem an dem Kontaktträger (8) angreifenden ersten Hebel (32;132;332;432) und einem im Gehäuse gelagerten zweiten Hebel (33;133;333;433), die über ein mittleres Kniegelenk (37;137;237;337;437) zu einem Kniehebel verbunden sind, welcher in annähernd gestrecktem Zustand den Kontaktträger (8) in seiner Schließposition verriegelt,
- wobei der Anker (43;143;343;443) derart mit dem Kniehebel gekoppelt ist, daß er bei Erregung des Magnetsystems (4) die Verriegelung zwischen dem Kniehebel und dem Kontaktträgen löst,
**dadurch gekennzeichnet,** daß
der Kontaktträger eine langgestreckte, einseitig im Gehäuse eingespannte Kontaktfeder (8) ist, die im Mittelbereich ihrer Länge den beweglichen Kontakt (81) trägt und an ihrem freien bzw. beweglichen Ende (82;182;382) mit dem äußeren Ende des ersten Kniegelenk-Hebels (32;132;332;432) unter Bildung eines ersten Drehgelenkes ineinandergreift.

2. Trennschalter nach Anspruch 1,
**dadurch gekennzeichnet,** daß das freie Ende (82) der Kontaktfeder (8) und das äußere Ende des ersten Hebels (32) in Form eines Hakens (83) und einer Öse (32b) ineinandergreifen.

3. Trennschalter nach Anspruch 1,
**dadurch gekennzeichnet,** daß das freie Ende (182) der Kontaktfeder (8) eine Einbuchtung (183) aufweist, in der das äußere Ende des ersten Hebels (132) gelagert ist.

4. Trennschalter nach einem der Ansprüche 1 bis 3,
**dadurch gekennzeichnet,** daß der Anker (43;143;443) des Magnetsystems (4) über einen Betätigungsarm (44;144;444) annähernd senkrecht zur Streckachse des Kniehebels auf das mittlere Kniegelenk (37;137;237;437) wirkt und. dieses bei Erregung des Magnetsystems (4) über den Totpunkt zieht.

5. Trennschalter nach Anspruch 4,
**dadurch gekennzeichnet,** daß der Betätigungsarm als hakenförmiger Ausleger (144;344) des Ankers (143;343) ausgebildet ist.

6. Trennschalter nach Anspruch 4,
**dadurch gekennzeichnet,** daß der Betätigungsarm durch einen abgekröpften Stelldraht (44) gebildet ist, der gelenkig am Anker (43) und am Kniegelenk (32,33) angreift.

7. Trennschalter nach einem der Ansprüche 1 bis 6,
**dadurch gekennzeichnet,** daß ander Kontaktfeder (8) eine zusätzliche Stützfeder (185) angreift und sie in ihrer Öffnungsposition verriegelt, derart, daß die Verriegelung erst bei einer vorgegebenen Schließkraft durch das Kniehebel-Spannwerk überwunden wird, um die Kontakte (64,81) sprungartig zu schließen.

8. Trennschalter nach einem der Ansprüche 1 bis 6,
**dadurch gekennzeichnet,** daß ein zusätzlicher, drehbar gelagerter Stützhebel (188) mit der Kontaktfeder (8) in ihrer Öffnungsposition verrastet und diese verriegelt, bis das freie Ende (182) der Kontaktfeder bei einer vorgegebenen Durchbiegung den Stützhebel (188) aus der Verrastung löst und ein sprungartiges Schließen der Kontakte (81,64) bewirkt.

9. Trennschalter nach einem der Ansprüche 1 bis 8,
**dadurch gekennzeichnet,** daß eine im Gehäuse (1) gelagerte Abschalttaste an dem mittleren Kniegelenk angreift und ein manuelles Öffnen der Kontakte ermöglicht.

10. Trennschalter nach einem der Ansprüche 1 bis 9,
**dadurch gekennzeichnet,** daß der zweite Kniegelenk-Hebel (33;133) auf einem kantigen, vorzugsweise vierkantigen Gelenkzapfen (39;130) gelagert ist, welcher von einem abgebogenen Schenkel einer Spannwerks-Grundplatte (31;131) aus Blech gebildet ist.

11. Trennschalter nach einem der Ansprüche 1 bis 10,
**dadurch gekennzeichnet,** daß die beiden Kniegelenk-Hebel (32,33,132,133) aus Blech geformt und mittels angeformter Gelenkzapfen (32a;132a;432a) das mittlere Kniegelenk bilden.

12. Trennschalter nach Anspruch 10 oder 11,
**dadurch gekennzeichnet,** daß der zweite Hebel (33) über das gehäusefest gelagerte äußere Ende hinaus zu einer Schaltfahne (5) verlängert ist, die durch eine Gehäuseöffnung (71) zur Handbetätigung zugänglich ist.

13. Trennschalter nach Anspruch 10,
**dadurch gekennzeichnet,** daß ein Drehknopf (135) konzentrisch zu dem äußeren Ende des zweiten Kniegelenk-Hebels (33) gelagert ist und daß der Drehknopf (135) mindestens einen an dem zweiten Hebel (33) angreifenden exzentrischen Mitnehmer (136) aufweist, mit dem der Kniehebel (132,133) in Schließrichtung und/oder in Öffnungsrichtung betätigbar ist.

14. Trennschalter nach einem der Ansprüche 1 bis 9,
**dadurch gekennzeichnet,** daß der zweite Hebel (133) über ein verschiebbares zweites Drehgelenk (230) an einem Schieber (231) gelagert ist, der seinerseits parallel zur Streckachse des Kniegelenkes verschiebbar im Gehäuse (1) geführt ist und daß der Schieber (231) über ein Langloch (239) mit einem exzentrischen Mitnehmer (236) eines gehäusefest gelagerten Drehknopfes (235) gekoppelt und durch diesen in der Spannposition des Kniegelenkes verriegelbar ist.

15. Trennschalter nach Anspruch 1,
**dadurch gekennzeichnet,** daß das freie Ende (380) der Kontaktfeder (8) lösbar mit dem äußeren Ende des ersten Hebelarmes (332) kuppelbar ist, daß eine Schaltklinke (386) drehbar auf der Kontaktfeder gelagert ist, um unter Federvorspannung den ersten Hebelarm (332) an der Kontaktfeder (8) zu verriegeln, daß der zweite Hebelarm (333) gehäusefest drehbar gelagert und mit einem Handbetätigungsorgan (335) verbunden ist, und daß der Anker (343) mit der Schaltklinke (386) in Eingriff ist, um bei Erregung des Magnetsystems (4) die Verriegelung der Kontaktfeder (8) zu öffnen.

16. Trennschalter nach Anspruch 1,
**dadurch gekennzeichnet,** daß der zweite Hebel ein in dem Gehäuse (1) geradlinig geführter Schieber (433) ist, daß ein gehäusefest gelagertes Drehorgan (435) mit einem exzentrischen Mitnehmer (436) in ein Langloch (439) des Schiebers eingreift, um diesen bei Drehung des Drehorgans in Richtung der Führung zu verschieben, daß der erste Hebel (432) mit dem mittleren Kniegelenk (437) durch eine Rückstellfeder (434) in eine Rast (438) am Schieber (433) einrastbar ist und daß das mittlere Kniegelenk (437) bei Erregung des Magnetsystems (4) durch den Anker (443) aus der Rast (438) bewegbar ist.
